# EUROPÄISCHE PATENTSCHRIFT

(11) **EP 1 196 747 B1**
(45) Veröffentlichungstag und Bekanntmachung des Hinweises auf die Patenterteilung: **16.04.2003**
(21) Anmeldenummer: 00956230.7
(22) Anmeldetag: 20.07.2000
(51) Int. Cl.: G01K 7/18

(54) **VORRICHTUNG ZUR HOCHTEMPERATURERFASSUNG UND VERFAHREN ZUR HERSTELLUNG DERSELBEN**
HIGH TEMPERATURE DETECTOR AND METHOD FOR THE PRODUCTION THEREOF
DISPOSITIF DE MESURE DE HAUTES TEMPERATURES ET PROCEDE DE FABRICATION DUDIT DISPOSITIF

(30) Priorität: 05.08.1999 DE 19936924
(43) Veröffentlichungstag der Anmeldung: 17.04.2002
(60) Teilanmeldung: 02026265.5
(73) Patentinhaber: Bernitz, Georg, 90455 Nürnberg (DE); Zitzmann, Heinrich, 91207 Lauf an der Pegnitz (DE)
(72) Erfinder: Bernitz, Georg, 90455 Nürnberg (DE); Zitzmann, Heinrich, 91207 Lauf an der Pegnitz (DE)
(74) Vertreter: Schoppe, Fritz, Dipl.-Ing.
(86) Internationale Anmeldenummer: EP0006966
(87) Internationale Veröffentlichungsnummer: WO01011325

(56) Entgegenhaltungen:
- EP-A- 0 017 359
- DE-A- 19 750 123
- US-A- 4 485 670

## Beschreibung

Die vorliegende Erfindung bezieht sich auf eine Vorrichtung zur Hochtemperaturerfassung, und auf ein Verfahren zur Herstellung einer solchen Vorrichtung zur Hochtemperaturerfassung.

Im Stand der Technik sind Platin-Meßwiderstände in Dünnschichttechnik für Anwendungen in Temperaturbereichen bis 600°C weit verbreitet. Je nach Temperaturbereich und Einsatzgebiet wurden unterschiedliche Ausführungsformen entwickelt. Besonderes Interesse besteht seit einigen Jahren an Ausführungsformen, die für den Einsatz bei höheren Temperaturen (z. B. bis 800°C oder sogar bis über 1.000°C) geeignet sind. Solche Platin-Meßwiderstände sind z. B. in den nachveröffentlichten DE 199 01 183 A und DE 199 01 184 beschrieben.

Bei Massenanwendungen ist aber häufig neben einer zuverlässigen Funktion vor allem auch die kostengünstige Herstellung von zentraler Bedeutung.

Die EP-A-0 017 359 beschreibt einen keramischen Sensor, welcher ein isolierendes Substrat umfaßt, das aus einem keramischen Material hergestellt ist. Ein elektrisches Leiterpaar ist auf dem isolierenden Substrat gebildet und durch eine isolierende Abdeckung bedeckt. An einem Ende des Substrats ist ein Ausgangsanschlußpaar vorgesehen, und am anderen Ende des Substrats ist ein Sensorelement angeordnet, wobei das Sensorelement über die elektrischen Leitungen mit den Ausgangsanschlüßen verbunden ist.

Ausgehend von diesem Stand der Technik liegt der vorliegenden Erfindung die Aufgabe zugrunde, eine einfache und kostengünstige Vorrichtung zur Hochtemperaturerfassung, und ein einfaches und kostengünstiges Verfahren zur Herstellung einer Vorrichtung zur Hochtemperaturerfassung zu schaffen.

Diese Aufgabe wird durch eine Vorrichtung gemäß Anspruch 1 und durch ein Verfahren gemäß Anspruch 8 gelöst.

Die vorliegende Erfindung schafft eine hybride Hochtemperaturerfassungseinrichtung, mit einem Hochtemperaturmeßfühler, der einen Hochtemperaturmeßfilm, einen ersten Anschluß aus einem hochtemperaturstabilen Material und einen zweiten Anschluß aus einem hochtemperaturstabilen Material, die mit dem Hochtemperaturmeßfilm verbunden sind, umfaßt; einem länglichen Gehäuse, aus einem ersten, länglichen Keramiksubstrat, einem zweiten, länglichen Keramiksubstrat und einem dritten, länglichen Keramiksubstrat, die miteinander verbunden sind, wobei das erste, längliche Keramiksubstrat zwischen dem zweiten, länglichen Keramiksubstrat und dem dritten, länglichen Keramiksubstrat angeordnet ist und eine durchgehende Ausnehmung benachbart zu einem ersten Ende des Gehäuses umfaßt, in der der Hochtemperaturmeßfühler angeordnet ist, wobei das zweite und das dritte Keramiksubstrat derart angeordnet sind, daß die Ausnehmung in dem ersten Keramiksubstrat vollständig überdeckt ist; einer ersten Leiterbahn aus einem hochtemperaturstabilen Material auf dem zweiten, länglichen Keramiksubstrat, die mit dem ersten Anschluß des Hochtemperaturmeßfühlers verbunden ist und sich in Richtung eines zweiten Endes des Gehäuses erstreckt; einer zweiten Leiterbahn aus einem hochtemperaturstabilen Material auf dem dritten, länglichen Keramiksubstrat, die mit dem zweiten Anschluß des Hochtemperaturmeßfühlers verbunden ist und sich in Richtung eines zweiten Endes des Gehäuses erstreckt; und einer benachbart zu dem zweiten Ende des Gehäuses angeordnete Anschlußstelle, an der elektrische Leitungen über ein nicht-hochtemperaturstabiles Material anschließbar sind, wobei über die Anschlußstelle ein durch den Hochtemperaturmeßfühler erzeugtes Signal abgreifbar ist.

Die vorliegende Erfindung schafft ein Verfahren zur Herstellung einer hybriden Hochtemperaturerfassungseinrichtung mit folgenden Schritten: Bereitstellen eines Hochtemperaturmeßfühlers, der einen Hochtemperaturmeßfilm, einen ersten Anschluß aus einem hochtemperaturstabilen Material und einen zweiten Anschluß aus einem hochtemperaturstabilen Material, die mit dem Hochtemperaturmeßfilm verbunden sind, umfaßt; Anordnen des Hochtemperaturmeßfühlers in einer durchgehenden Ausnehmung eines ersten Keramiksubstrats, die benachbart zu einem ersten Ende des ersten Keramiksubstrats angeordnet ist; Verschmelzen des ersten Keramiksubstrats mit einem zweiten Keramiksubstrat, so daß eine auf dem zweiten Keramiksubstrat angeordnete Leiterbahn an einem ersten Ende desselben mit dem ersten Anschluß des Hochtemperaturfühlers verbunden ist, wobei sich die Leiterbahn zu einem zweiten Ende des zweiten Keramiksubstrats erstreckt; Verschmelzen des ersten Keramiksubstrats mit einem dritten Keramiksubstrat, so daß eine auf dem dritten Keramiksubstrat angeordnete Leiterbahn an einem ersten Ende desselben mit dem zweiten Anschluß des Hochtemperaturmeßfühlers verbunden ist, wobei sich die Leiterbahn zu einem zweiten Ende des dritten Keramiksubstrats erstreckt; und. Aufbringen einer ersten Anschlußfläche auf dem zweiten, länglichen Keramiksubstrat und einer zweiten Anschlußfläche auf dem dritten, länglichen Keramiksubstrat, zum Anschließen elektrischer Leitungen über ein nicht-hochtemperaturstabiles Material zum Abgreifen eines durch den Hochtemperaturmeßfühler erzeugten Signals.

Bevorzugte Weiterbildungen der vorliegenden Erfindung sind in den Unteransprüchen definiert.

Nachfolgend werden bevorzugte Ausführungsbeispiele der vorliegenden Erfindung anhand der beiliegenden Zeichnungen näher erläutert. Es zeigen:
- Fig. 1: einen Platin-SMD-Chip;
- Fig. 2a bis 2d: die einzelnen Keramiksubstrate, aus denen das Gehäuse hergestellt wird;
- Fig. 3: das aus den Keramiksubstraten zusammengesetzte Gehäuse; und
- Fig. 4: einen Hochtemperatursensor gemäß einem weiteren Ausführungsbeispiel der vorliegenden Erfindung.

In der nachfolgenden Beschreibung der bevorzugten Ausführungsbeispiele der vorliegenden Erfindung werden für gleiche oder ähnliche Elemente in unterschiedlichen Figuren die gleichen Bezugszeichen verwendet.

Die vorliegende Erfindung geht aus von. sogenannten SMD-Chips, die kostengünstig herstellbar sind und für Anwendungen im niedrigen Temperaturbereich, z. B. bis 150°C mit lötbaren Kontakten, bekannt sind. Für den Einsatz bei sehr hohen Temperaturen sind jedoch beträchtliche Modifizierungen notwendig, um einen zuverlässigen Schutz der Platinwiderstandsschicht in widrigen Umgebungsbedingungen sicherzustellen (Verhinderung der Diffusion problematischer Fremdstoffe in das Platin) und um eine sichere Kontaktierung der elektrischen Zuleitungen für den Meßstrom zu gewährleisten. Insbesondere ist darauf zu achten, daß nur geeignete Materialien verwendet werden, welche durch den notwendigen Meßstrom bei den angestrebten hohen Einsatztemperaturen nicht elektrochemisch zersetzt werden.

Zunächst ist ein geeigneter SMD-Chip zu erstellen, der sich von herkömmlichen Ausführungen dadurch unterscheidet, daß der auf einem Keramiksubstrat aufgebrachte und bereits strukturierte Platinfilm nicht durch eine Schutzglasur abgedeckt ist und die Kontaktierungsflächen nicht aus Silber oder einer Silberlegierung (z. B. Ag/Pd), sondern aus reinem. Platin bestehen.

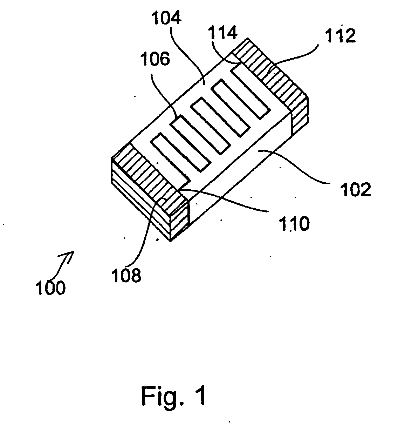

In Fig. 1 ist ein solcher SMD-Chip 100 gezeigt, der ein Keramiksubstrat 102 umfaßt, das beispielsweise aus Al₂O₃ hergestellt ist. Auf einer ersten Hauptoberfläche 104 des Keramiksubstrats 102 ist ein strukturierter Meßfilm 106 aufgebracht, der beispielsweise aus Platin oder einem schwach mit Rhodium legierten Platinfilm besteht. Ein erster Anschluß 108 ist gebildet, der mit einem ersten Ende 110 des Meßfilms 106 verbunden ist. Wie aus Fig. 1 zu erkennen ist, erstreckt sich der erste Anschluß 108 von der ersten Hauptoberfläche 104 des Keramiksubstrats 102 über Seitenflächen desselben auf die zweite Hauptoberfläche des Keramiksubstrats 102. Auf gleiche Art ist ein zweiter Anschluß 112 gebildet, der mit einem zweiten Ende 114 des Meßfilms 106 verbunden ist.

Bei dem in Fig. 1 dargestellten Ausführungsbeispiel sind der Meßfilm 106, der erste Anschluß 108 und der zweite Anschluß 112 aus dem gleichen, hochtemperaturstabilen Material gebildet, wie z. B. Platin. Bei einem weiteren Ausführungsbeispiel können jedoch auch unterschiedliche Materialien verwendet werden, sofern diese die erforderliche Hochtemperaturstabilität aufweisen. Mögliche Materialien sind Platinlegierungen bzw. für einfache Anwendungen (ca. 800°C) Nickel oder Nickellegierungen.

Der in Fig. 1 dargestellte SMD-Chip 100 stellt somit einen Hochtemperaturmeßfühler dar, wobei durch den Film 106 ein Hochtemperaturmeßelement gebildet ist.

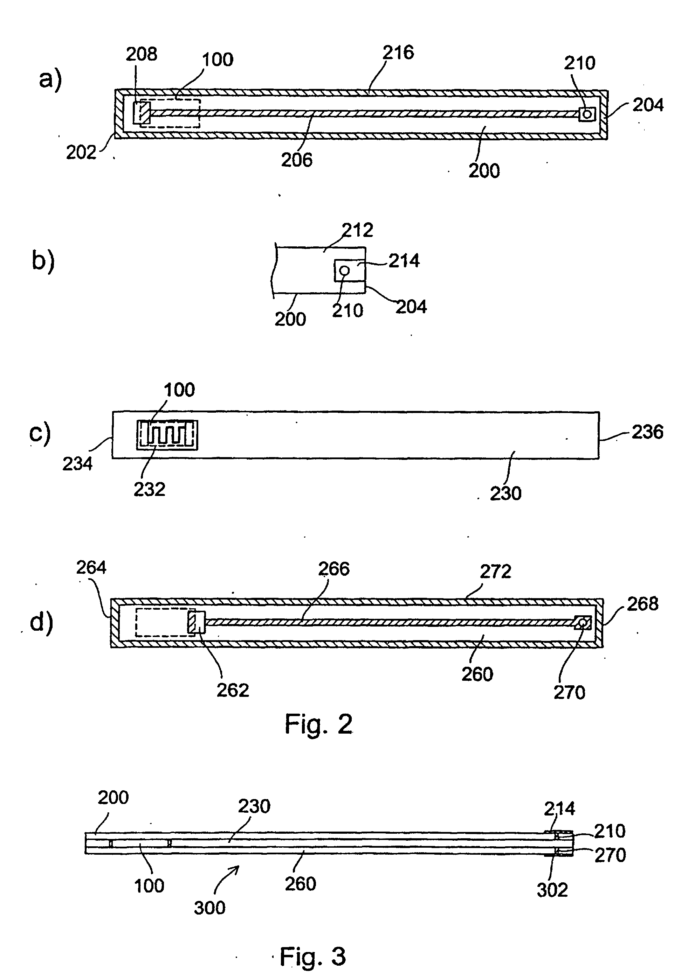

Anhand der Fig. 2 werden nachfolgend die einzelnen Keramiksubstrate näher beschrieben, aus denen das Gehäuse der erfindungsgemäßen Vorrichtung hergestellt wird.

Fig. 2a zeigt ein erstes bzw. unteres Keramiksubstrat bzw. Keramikdeckplättchen 200, wobei hier diejenige Oberfläche dargestellt ist, die beim zusammengesetzten Gehäuse dem Hochtemperaturmeßfühler bzw. SMD-Chip gegenüberliegt. Diese Seite wird der Einfachheithalber als "Innenseite" bezeichnet. In Fig. 2a ist derjenige Bereich gestrichelt dargestellt, in dem das Kerämiksubstrat 200 mit dem SMD-Chip 100 überlappend angeordnet ist. Das zweite Ende des Keramiksubstrats 200 ist mit dem Bezugszeichen 204 versehen. Auf der Innenseite des Keramiksubstrats 200 ist eine Leiterbahn 206 aus einem hochtemperaturstabilen Material gebildet, wie z.B. Platin oder Platinlegierung (z.B. PtRh).

Benachbart zu dem ersten Ende 202 des Keramiksubstrats 200 weist die Leiterbahn 206 eine Kontaktanschlußfläche 208 auf, mittels der beim Zusammenbau die Leiterbahn 206 über den Kontakt 208 mit dem ersten Anschluß 108 (siehe Fig. 1) des SMD-Chips 100 kontaktiert wird. Wie zu erkennen ist, er-. streckt sich die Leiterbahn 206 ausgehend von der Kontakt-. stelle 208 in Richtung des zweiten Endes 204 des Keramiksubstrats 200, wobei an dem Ende der Leiterbahn 206, welches benachbart zum zweiten Ende 204 des Keramiksubstrats 200 angeordnet ist, eine Durchkontaktierung 210 vorgesehen ist, mittels der die Leiterbahn 206 von der in Fig. 2a dargestellten "Innenseite" des Keramiksubstrats 200 auf die in Fig. 2b teilweise dargestellte "Außenseite" 212 des Keramiksubstrats 200 geführt wird. Wie in Fig. 2b zu erkennen ist, ist auf der "Außenseite" 212 des Keramiksubstrats 200 eine Anschlußfläche 214 angeordnet.

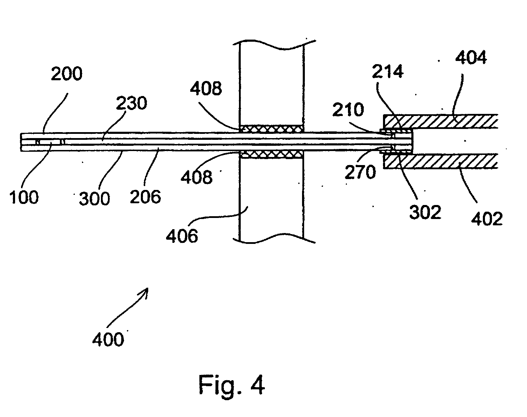

Bei einer anderen Leiterbahnführung kann auf die Durchkontaktierung (Fig. 4) verzichtet werden. Hierbei umfaßt das erste (mittlere) Keramiksubstrat am zweiten Ende auf Vorderund Rückseite eine Metallisierung von ca. 3mm Länge. Die beiden äußeren Keramiksubstrate (zweites und drittes Keramiksubstrat) werden bei dieser Ausführungsform ca. 2mm kürzer gehalten. Im Bereich des zweiten Endes des zweiten und dritten Keramiksubstrats liegt dann jeweils eine Überlappung mit der Metallisierung des ersten Keramiksubstrats vor, und außerhalb der Überlappungszone bilden die Metallisierungen des ersten Keramiksubstrats jeweils eine Anschlußfläche, z.B. für das Anschweißen eines Anschlußdrahtes.

Bei einer Ausführung, bei der beide (Draht-) Kontakte auf einer Seite des fertigen Sensorelements liegen sollen, kann eine Kombination der beschriebenen Leiterbahnführungen verwendet werden (1 x Durchkontaktierung - 1 x Überlappung).

Das Keramiksubstrat 200 ist an seiner Umrandung mit einer Glasur 216 versehen, die beim Zusammenfügen der einzelnen Elemente des Gehäuses zu einer hermetischen Verschmelzung der einzelnen, teilweise noch zu beschreibenden Keramiksubstrate führt.

In Fig. 2c ist ein zweites Keramiksubstrat 230 gezeigt, das aus dem gleichen Material hergestellt ist, wie das anhand der Fig. 2a und 2b beschriebene erste Substrat 200. Das zweite Keramiksubstrat 230 bzw. das mittlere Keramikplättchen 230 umfaßt keine Leiterbahnstrukturen, sondern es ist lediglich eine Ausnehmung bzw. ein Ausschnitt 232 vorgesehen, in den der anhand der Fig. 1 beschriebene SMD-Chip 100 (gestrichelt dargestellt) eingelegt wird. Die Ausnehmung 232 ist benachbart zu einem ersten Ende 234 des zweiten Keramiksubstrats 230 angeordnet, und das zweite Ende des Keramiksubstrats 230 ist mit dem Bezugszeichen 236 versehen.

Fig. 2d zeigt ein "oberes" Keramikdeckplättchen bzw. ein drittes Keramiksubstrat 260, das bezüglich seines Aufbaus im wesentlichen identisch zu dem anhand der Fig. 2a beschriebenen Keramikplättchen 200 ist, mit Ausnahme der Tatsache, daß sich die Kontaktfläche 262 zur Kontaktierung des zweiten Anschlusses 112 (siehe Fig. 1) des SMD-Chips 100 weiter von dem ersten Ende 264 des dritten Keramiksubstrats 260 befindet, was durch die unterschiedliche Anordnung der entsprechenden Anschlüsse auf dem SMD-Chip 100 hervorgerufen wird. Wie schon der anhand der Fig. 2a beschriebene Kontakt 208 dient auch der Kontakt 262 zur elektrischen Kontaktierung des SMD-Chips 100 über den zweiten Anschluß 112 (siehe Fig. 1) Ausgehend von dem Kontakt 262 erstreckt sich eine Leiterbahn 266 in Richtung des zweiten Endes 268 des dritten Substrats 260, wobei die Leiterbahn 266 aus den gleichen Materialien hergestellt sein kann, wie die anhand der Fig. 2a beschriebene. In Fig. 2d ist, ähnlich wie in Fig. 2a, die "Innenseite" des Keramiksubstrats 260 gezeigt, also diejenige Seite, die dem zweiten Substrat 230 nach dem Zusammenbau gegenüber liegt. Benachbart zu dem zweiten Ende 268 des dritten Substrats 260 ist eine Durchkontaktierung 270 vorgesehen, über die, ähnlich wie bei dem ersten Keramiksubstrat die Leiterbahn 266 auf die "Außenseite" herausgeführt wird und dort mit einem, in Fig. 2d nicht dargestellten, Anschluß verbunden ist.

Wie oben erwähnt, wird der anhand der Fig. 1 beschriebene SMD-Chip 100 in einem speziellen Keramikaufbau, bestehend aus dem ersten bis dritten Keramiksubstrat 200, 230, 260 gehäust, wobei die Chip-Anschlußflächen bzw. -Kontaktflächen 108, 112 mit den vorgesehenen Platinleiterbahnen 206, 266 des jeweiligen unteren bzw. oberen Keramikdeckplättchens 200, 260 kontaktiert werden. Der Aufbau der Keramikgehäuse besteht somit aus insgesamt drei übereinander gelegten Plättchen 200, 230, 260, die z. B. eine typische Abmessung von 25 mm x 3 mm x 0,3 mm (Länge, Breite, Dicke) aufweisen können. Das untere und das obere Deckplättchen 200, 260 weisen jeweils eine in Längsrichtung geführte Platinleiterbahn 206, 266 auf, die jeweils an einem Ende zu einer äußeren Kontaktfläche 214 durchkontaktiert sind, wie dies in Fig. 2a und 2d gezeigt ist. Das mittlere Plättchen 230 weist den rechteckigen Ausschnitt 262 auf, in welchen der SMD-Chip 100 eingelegt werden kann, wie dies in Fig. 2c gezeigt ist.

In Fig. 3 ist das Gehäuse 300 dargestellt, welches sich durch die Verbindung der drei Keramikplättchen 200, 230 und 260 ergibt. Neben den bereits anhand der Fig. 2 beschriebenen Elementen ist in Fig. 3 ferner der Anschluß 302 auf der Außenseite des dritten Substrats 260 zu erkennen, zu dem die Leiterbahn in dem dritten Substrat 260 über die Durchkontaktierung 270 herausgeführt wird.

In der Prozeßabfolge kann zunächst das untere Keramikdeckplättchen 260 mit dem mittleren Keramikplättchen 230, z. B. mittels der der auf das untere Deckplättchen partiell aufgebrachten Glasurpaste 272 (siehe Fig. 2d), dicht verschmolzen werden. Die Platinleiterbahn 266 auf der Innen- bzw. Oberseite des unteren Plättchens 260 ist so geführt, daß sie bis zur "vorderen" Kontaktposition des SMD-Chips 100 in den Ausschnitt 232 des darüber gelegten mittleren Plättchens 230 hineinragt.

Auf dieses Leiterbahnstück innerhalb des Ausschnitts 232 wird nun ein kleiner "Tropfen" Dickschicht-Leiterpaste (z.B. Platin) aufgebracht, und anschließend wird der SMD-Chip 100 so in den Ausschnitt gelegt, daß ein Kontaktanschluß 112 des SMD-Chips 100 mit dieser unteren Leiterbahn 266 elektrisch verbunden ist. Nun wird der gegenüberliegende Kontaktanschluß 108 des SMD-Chips 100 auf der Oberseite mit einem "Tropfen" Platin-Dickschichtpaste versehen und das obere Kermikdeckplättchen 200 (Leiterbahn 206 nach unten weisend) so auf das mittlere Keramikplättchen 230 gelegt, daß der eingelegte SMD-Chip 100 mittels der vorher aufgebrachten Platin-Paste mit der nach unten weisenden Leiterbahn 206 des oberen Keramikdeckplättchens 200 elektrisch verbunden ist. Die Unter- bzw. Innenseite des oberen Keramikdeckplättchens 200 wurde in einem vorangehenden Prozeßschritt bereits partiell mit einer Glasurschicht 216 versehen, so daß das Deckplättchen 200 mit dem mittleren Plättchen 230 samt SMD-Chip 100 bei einem Einbrennprozeß dicht verschmolzen werden kann. Der gerade beschriebene Einbrennprozeß erfolgt bei einer Temperatur zwischen 1200°C und 1450°C für eine Zeitdauer von ca. 30min (Peak-Dauer). Für die Glasurpaste wird vorzugsweise eine Fritte 1 aus SiO₂(46,6%), BaO(39,2%), Al₂O₃(12,7%), CaO(0,5%), SrO(0,5%) oder eine Fritte 2 aus SiO₂(20,5%), Al₂O₃(55,0%),CaO(19,0%), MgO(5,5%) verwendet (Gewichtsprozente in Klammern).

Auf die oben beschriebene Art und Weise ist das SMD-Element innerhalb der drei Keramikplättchen 200, 230, 260 hermetisch dicht eingeschlossen und die elektrische Verbindung über die Leiterbahnen 206, 266 und die Durchkontaktierungen 210, 270 auf die äußeren Kontaktflächen 214, 302 geführt.

Eine weitere Ausführungsform ist dadurch gegeben, daß statt des ersten, zweiten und dritten Keramikplättchens eine sogenannte "grüne Keramik" verwendet wird. Hierbei entfällt das Aufdrucken der zur Verschmelzung der Keramikplättchen notwendigen Glasurpaste, da die drei grünen Keramikfolien (bereits mit SMD-Chip bestückt und Pt-Leiterpaste bedruckt) durch einen entsprechenden Brennvorgang der Gesamtschichtung (T > 1200°C) in sich hermetisch dicht versintern.

Dieser Aufbau bietet - bei entsprechender Gesamtlänge des Gehäuses 300 - die Möglichkeit, daß der äußere Kontaktanschluß 214, 302 bereits auf einer deutlich geringeren Temperatur liegt als die Sensorspitze (SMD-Chip).

Dieser Effekt kann noch weiter unterstützt werden, indem, wie dies nachfolgend anhand der Fig. 4 beschrieben wird, etwa in der Mitte der Vorrichtung eine "Trennwand" wirksam wird. In Fig. 4 ist ein Sensor 400 gemäß einem weiteren Ausführungsbeispiel der vorliegenden Erfindung gezeigt, und dieser Sensor umfaßt das anhand der Fig. 3 beschriebene Gehäuse 300. Wie zu erkennen ist, ist bei dem in Fig. 4 dargestellten Beispiel an das Ende des Gehäuses 300, welches von dem SMD-Chip 100 beabstandet ist, die entsprechende Zuleitung angebracht, und zwar in der Form eines ersten und eines zweiten Zuleitungsdrahts 402 und 404.

An einer Position entlang des Gehäuses 300, die näher an den Anschlußflächen 210 und 302 ist, ist eine Trennwand 406 aus Metall (z.B. Cr-Stahl) oder Keramik (z.B. Al₂O₃ oder Keramik 221) angeordnet. Zwischen dem Gehäuse 300 und der Trennwand 406 ist eine Dichtungsmasse 408 angeordnet, die z.B. aus einer Glasur mit einem geeigneten thermischen Ausdehnungskoeffizienten (Fritte 1) oder aus einer Keramikpaste (z.B. Cotronics 989) hergestellt ist.

Der wesentliche Vorteil der erfindungsgemäßen Vorrichtung besteht darin, daß die Kontaktstellen 210, 302 für die elektrischen Zuleitungen 402, 404, die insbesondere bei den vorliegenden extrem hohen Temperaturen einer erheblichen thermischen Belastung ausgesetzt werden, kostengünstig in eine Zone wesentlich niedriger Temperatur gelegt werden können. Die Kosten für die "langen" Keramikplättchen 200, 230, 260 der Gehäuse 300 sind pro Fläche wesentlich günstiger als die Kosten der platinbeschichteten Dünnfilm-Keramik für den Temperatursensor bzw. den Hochtemperaturmeßfühler 100. Die Größe der SMD-Elemente 100, die das sensitive Teil darstellen, kann dagegen relativ klein und dadurch kostengünstig gehalten werden.

Ein weiterer, ebenfalls sehr wesentlicher Vorteil kann mit dem beschriebenen Aufbau erreicht werden, wenn eine kurze Ansprechzeit für den Temperatursensor benötigt wird. Hier läßt sich durch günstig gewählte Abmessungen (dünne Keramikplättchen) einerseits, sowie insbesondere durch den möglichen Verzicht auf ein zusätzliches Schutzrohr für den Temperaturfühler, das in herkömmlichen Aufbauten normalerweise erforderlich ist, eine optimale Ankopplung an das Meßmedium erreichen.

## Patentansprüche

1. Hybride Hochtemperaturerfassungseinrichtung, mit
einem Hochtemperaturmeßfühler (100), der einen Hochtemperaturmeßfilm (106), einen ersten Anschluß aus einem hochtemperaturstabilen Material(108) und einen zweiten Anschluß (112) aus einem hochtemperaturstabilen Material, die mit dem Hochtemperaturmeßfilm (106) verbunden sind, umfaßt;
einem länglichen Gehäuse (300), aus einem ersten, länglichen Keramiksubstrat (230), einem zweiten, länglichen Keramiksubstrat (200) und einem dritten, länglichen Keramiksubstrat (260), die miteinander verbunden sind, wobei das erste, längliche Keramiksubstrat (230) zwischen dem zweiten, länglichen Keramiksubstrat (200) und dem dritten, länglichen Keramiksubstrat (260) angeordnet ist und eine durchgehende Ausnehmung (232) benachbart zu einem ersten Ende (234) des Gehäuses (300) umfaßt, in der der Hochtemperaturmeßfühler (100) angeordnet ist, wobei das zweite und das dritte Keramiksubstrat (200, 206) derart angeordnet sind, daß die Ausnehmung (232) in dem ersten Keramiksubstrat (230) vollständig überdeckt ist;
einer ersten Leiterbahn (206) aus einem hochtemperaturstabilen Material auf dem zweiten, länglichen Keramiksubstrat (200), die mit dem ersten Anschluß (108) des Hochtemperaturmeßfühlers (100) verbunden ist und sich in Richtung eines zweiten Endes des Gehäuses (300) erstreckt;
einer zweiten Leiterbahn (266) aus einem hochtemperaturstabilen Material auf dem dritten, länglichen Keramiksubstrat (260), die mit dem zweiten Anschluß (112) des Hochtemperaturmeßfühlers (100) verbunden ist und sich in Richtung eines zweiten Endes des Gehäuses (300) erstreckt; und
einer benachbart zu dem zweiten Ende des Gehäuses (300) angeordnete Anschlußstelle (214; 302), an der elektrische Leitungen (402, 404) über ein nicht-hdchtemperaturstabiles Material anschließbar sind, wobei über die Anschlußstelle ein durch den Hochtemperaturmeßfühler (100) erzeugtes Signal abgreifbar ist.

2. Hybride Hochtemperaturerfassungseinrichtung gemäß Anspruch 1, bei der das Hochtemperaturmeßfilm (106) ein strukturierter Film aus einem hochtemperaturstabilen Material ist, wobei der erste Anschluß (108), der zweite Anschluß (112) und der strukturierte Film (106) aus dem gleichen hochtemperaturstabilen Material hergestellt sind und auf einem Keramiksubstrat (102) gebildet sind.

3. Hybride Hochtemperaturerfassungseinrichtung gemäß Anspruch 2, bei der die erste und die zweite Leiterbahn (206, 266) aus demselben hochtemperaturstabilen Material hergestellt sind, aus dem der erste Anschluß (108), der zweite Anschluß (112) und der strukturierte Film (106) hergestellt sind.

4. Hybride Hochtemperaturerfassungseinrichtung gemäß einem der Ansprüche 1 bis 4, bei der
die erste Leiterbahn (206) auf einer ersten, dem ersten Keramiksubstrat (230) zugewandten Oberfläche des zweiten, länglichen Keramiksubstrats (200) angeordnet ist und über eine Durchkontaktierung (210) benachbart zu dem zweiten Ende (204) mit einer ersten Anschlußfläche (214) der Anschlußstelle auf einer zweiten Oberfläche des zweiten, länglichen Keramiksubstrats (200) verbunden ist; und
die zweite Leiterbahn (266) auf einer ersten, dem ersten Keramiksubstrat (230) zugewandten Oberfläche des dritten, länglichen Keramiksubstrats (260) angeordnet ist und über eine Durchkontaktierung (270) benachbart zu dem zweiten Ende (268) mit einer zweiten Anschlußfläche (302) der Anschlußstelle auf einer zweiten Oberfläche des dritten, länglichen Keramiksubstrats (260) verbunden ist.

5. Hybride Hochtemperaturerfassungseinrichtung gemäß einem der Ansprüche 1 bis 4, mit
einer thermischen Abschirmung (406) an dem Gehäuse an einer Position, die zwischen einem ersten und einem zweiten Ende des Gehäuses (300) angeordnet ist.

6. Hybride Hochtemperaturerfassungseinrichtung gemäß Anspruch 5, bei der die thermische Abschirmung (406) aus einem Metall oder einem Keramikmaterial hergestellt ist.

7. Hybride Hochtemperaturerfassungseinrichtung gemäß einem der Ansprüche 1 bis 6, bei der das hochtemperaturstabile Material Platin ist.

8. Verfahren zur Herstellung einer hybriden Hochtemperaturerfassungseinrichtung mit folgenden Schritten:
a) Bereitstellen eines einem Hochtemperaturmeßfühlers (100), der einen Hochtemperaturmeßfilm (106), einen ersten Anschluß aus einem hochtemperaturstabilen Material(108) und einen zweiten Anschluß (112) aus einem hochtemperaturstabilen Material, die mit dem Hochtemperaturmeßfilm (106) verbunden sind, umfaßt;
b) Anordnen des Hochtemperaturmeßfühlers (100) in einer durchgehenden Ausnehmung (232) eines ersten Keramiksubstrats (230), die benachbart zu einem ersten Ende (234) des ersten Keramiksubstrats (230) angeordnet ist;
c) Verschmelzen des ersten Keramiksubstrats (230) mit einem zweiten Keramiksubstrat (200), so daß eine auf dem zweiten Keramiksubstrat angeordnete Leiterbahn (206) an einem ersten Ende (264) desselben mit dem ersten Anschluß (108) des Hochtemperaturfühlers (100) verbunden ist, wobei sich die Leiterbahn (206) zu einem zweiten Ende des zweiten Keramiksubstrats (200) erstreckt;
d) Verschmelzen des ersten Keramiksubstrats (230) mit einem dritten Keramiksubstrat (260), so daß eine auf dem dritten Keramiksubstrat (260) angeordnete Leiterbahn (266) an einem ersten Ende (264) desselben mit dem zweiten Anschluß (112) des Hochtemperaturmeßfühlers (100) verbunden ist, wobei sich die Leiterbahn (266) zu einem zweiten Ende des dritten Keramiksubstrats (260) erstreckt; und
e) Aufbringen einer ersten Anschlußfläche (214) auf dem zweiten, länglichen Keramiksubstrat (200) und einer zweiten Anschlußfläche (302) auf dem dritten, länglichen Keramiksubstrat (260), zum Anschließen elektrischer Leitungen (402, 404) über ein nicht-hochtemperaturstabiles Material zum Abgreifen eines durch den Hochtemperaturmeßfühler (100) erzeugten Signals.

9. Verfahren gemäß Anspruch 8 mit folgendem Schritt:
Kontaktieren der ersten und der zweiten Leiterbahn (206, 266) mit einer ersten bzw. zweiten Anschlußfläche (214, 302), die benachbart zu dem zweiten Ende (204, 268) des zweiten bzw. dritten Keramiksubstrats (200, 260) angeordnet ist.

10. Verfahren gemäß Anspruch 8 oder 9 mit folgendem Schritt:
Anordnen einer thermischen Trennwand (406) an dem Gehäuse, das sich durch die Verschmelzung des ersten, zweiten und dritten Keramiksubstrats ergibt, an einer Position zwischen einem ersten und einem zweiten Ende des Gehäuses.

## Claims

1. A hybrid high-temperature detector means comprising:
a high-temperature sensor (100) comprising a high-temperature measuring film (106), a first terminal made of a high-temperature-stable material (108) and a second terminal (112) made of a high-temperature-stable material, the terminals being connected to the high-temperature measuring film (106);
an elongated housing (300) comprising a first elongated ceramic substrate (230), a second elongated ceramic substrate (200) and a third elongated ceramic substrate (260), the elongated ceramic substrates being connected with each other, the first elongated ceramic substrate (230) being arranged between the second elongated ceramic substrate (200) and the third elongated ceramic substrate (260) and including a through recess (232) which is located adjacent a first end (234) of the housing (300) and in which the high-temperature sensor (100) is arranged, the second and third ceramic substrates (200, 206) being arranged such that the recess (232) in the first ceramic substrate (230) is fully covered;
a first conductor trace (206) formed of a high-temperature-stable material on the second elongated ceramic substrate (200), the first conductor trace (206) being connected to the first terminal (108) of the high-temperature sensor (100) and extending in the direction of a second end of the housing (300);
a second conductor trace (266) consisting of a high-temperature-stable material on the third elongated ceramic substrate (260), the second conductor trace (266) being connected to the second terminal (112) of the high-temperature sensor (100) and extending in the direction of a second end of the housing (300); and
a terminal location (214; 302) located adjacent the second end of the housing (300) and adapted to have connected thereto electric leads (402, 404) via a non-high-temperature-stable material, a signal produced by the high-temperature sensor (100) being adapted to be tapped via the terminal location.

2. A hybrid high-temperature detector according to claim 1, wherein the high-temperature measuring film (106) is a patterned film made of a high-temperature-stable material, the first terminal (108), the second terminal (112) and the patterned film (106) being produced from the same high-temperature-stable material and being formed on a ceramic substrate (102).

3. A hybrid high-temperature detector means according to claim 2, wherein the first and second conductor traces (206, 266) are produced from the same high-temperature-stable material that has been used for producing the first terminal (108), the second terminal (112) and the patterned film (106).

4. A hybrid high-temperature detector means according to one of the claims 1 to 4, wherein
the first conductor trace (206) is arranged on a first surface of the second elongated ceramic substrate (200), which faces the first ceramic substrate (230), the first conductor trace (206) being connected via a through-contacting means (210), which is located adjacent the second end (204), to a first terminal pad (214) of the terminal location on a second surface of the second elongated ceramic substrate (200); and
the second conductor trace (266) is arranged on a first surface of the third elongated ceramic substrate (260), which faces the first ceramic substrate (230), the second conductor trace (266) being connected via a through-contacting means (270), which is located adjacent the second end (268), to a second terminal pad (302) of the terminal location on a second surface of the third elongated ceramic substrate (260).

5. A hybrid high-temperature detector means according to one of the claims 1 to 4, comprising:
a thermal shield (406) on the housing, the thermal shield (406) being arranged at a position between a first and a second end of the housing (300).

6. A hybrid high-temperature detector means according to claim 5, wherein the thermal shield (406) is made of a metal or of a ceramic material.

7. A hybrid high-temperature detector means according to one of the claims 1 to 6, wherein the high-temperature-stable material is platinum.

8. A method of producing a hybrid high-temperature detector means comprising the following steps:
a) providing a high-temperature sensor (100) comprising a high-temperature measuring film (106), a first terminal made of a high-temperature-stable material (108) and a second terminal (112) made of a. high-temperature-stable material, the first and second terminals being connected to the high-temperature measuring film (106);
b) arranging the high-temperature sensor (100) in a through recess (232) of a first ceramic substrate (230), the through recess (232) being arranged adjacent a first end (234) of the first ceramic substrate (230);
c) fusing the first ceramic substrate (230) with a second ceramic substrate (200) so that a conductor trace (206) arranged on the second ceramic substrate is connected to the first terminal (108) of the high-temperature sensor (100) at a first end (264) of the second ceramic substrate, the conductor trace (206) extending to a second end of the second ceramic substrate (200);
d) fusing the first ceramic substrate (230) to a third ceramic substrate (260) so that a conductor trace (266) arranged on the third ceramic substrate (260) is connected to the second terminal (112) of the high-temperature sensor (100) at a first end (264) of the third ceramic substrate, the conductor trace (266) extending to a second end of the third ceramic substrate (260); and
e) applying a first terminal pad (214) to the second elongated ceramic substrate (200) and a second terminal pad (302) to the third elongated ceramic substrate (260) for connecting electric leads (402, 404) via a non-high-temperature-stable material so as to tap a signal produced by the high-temperature sensor (100).

9. A method according to claim 8 comprising the following step:
contacting the first and second conductor traces (206, 266) with first and second terminal pads (214, 302) arranged adjacent the respective second end (204, 268) of the second and third ceramic substrates (200, 260).

10. A method according to claim 8 or 9 comprising the following step:
arranging a thermal partition (406) on the housing obtained by fusing the first, second and third ceramic substrates, the thermal partition being arranged at a position between a first and a second end of the housing.

## Revendications

1. Dispositif hybride de mesure de hautes températures, avec
une sonde de hautes températures (100) comprenant un film de mesure de hautes températures (106), une première connexion dans un matériau à haute résistance thermique (108) et une deuxième connexion (112) dans un matériau à haute résistance thermique, reliées au film de mesure de hautes températures (106) ;
un boîtier oblong (300), formé par un premier substrat céramique oblong (230), un deuxième substrat céramique oblong (200) et un troisième substrat céramique oblong (260), qui sont reliés les uns aux autres, où le premier substrat céramique oblong (230) est positionné entre le deuxième substrat céramique oblong (200) et le troisième substrat céramique oblong (260) et comprend, à proximité d'une première extrémité (234) du boîtier (300), un évidement d'un seul tenant (232), dans lequel est disposée la sonde de hautes températures (100) et où le deuxième et le troisième substrat céramique (200, 206) sont disposés de manière à ce que l'évidement (232) du premier substrat céramique (230) soit complètement recouvert ;
une première piste conductive (206), dans un matériau à haute résistance thermique, agencée sur le deuxième substrat céramique oblong (200), qui est reliée à la première connexion (108) de la sonde de hautes températures (100) et qui s'étend en direction d'une deuxième extrémité du boîtier (300) ;
une deuxième piste conductive (266) dans un matériau à haute résistance thermique, agencée sur le troisième substrat céramique oblong (260), qui est reliée à la deuxième connexion (112) de la sonde de hautes températures (100) et qui s'étend en direction d'une deuxième extrémité du boîtier (300) et
un point de connexion (214, 302), disposé à proximité de la deuxième extrémité du boîtier (300), sur lequel des conducteurs (402, 404) électriques dans un matériau non résistant aux hautes températures peuvent être raccordés et où un signal généré par la sonde de hautes températures (100) peut être prélevé via le point de connexion.

2. Dispositif hybride de mesure de hautes températures selon la revendication 1, dans lequel le film de mesure de hautes températures (106) est un film structuré, dans un matériau à haute résistance thermique, où la première connexion (108), la deuxième connexion (112) et le film structuré (106) sont fabriqués dans le même matériau à haute resistance thermique et appliqués sur un substrat céramique (102).

3. Dispositif hybride de mesure de hautes températures selon la revendication 2, dans lequel la première et la deuxième piste conductive (206, 266) sont fabriquées dans le même matériau à haute resistance thermique que celui de la première connexion (108), de la deuxième connexion (112) et du film structuré (106).

4. Dispositif hybride de mesure de hautes températures selon l'une des revendications 1 à 4, pour lequel
la première piste conductive (206) est disposée sur une première surface du deuxième substrat céramique oblong (200), face au premier substrat céramique (230), et reliée par métallisation d'un trou (210) à proximité de la deuxième extrémité (204), à une première surface de connexion (214) du point de connexion sur une deuxième surface du deuxième substrat céramique oblong (200) ; et
la deuxième piste conductive (266) est disposée sur une première surface du troisième substrat céramique oblong (260) faisant face au premier substrat céramique (230), et reliée par métallisation d'un trou (270) à proximité de la deuxième extrémité (264) à une deuxième surface de connexion (302) du point de connexion sur une deuxième surface du troisième substrat céramique oblong (260).

5. Dispositif hybride de mesure de hautes températures selon l'une des revendications 1 à 4, avec
un écran thermique (406) positionné sur le boîtier, entre une première extrémité et une deuxième extrémité du boîtier (300).

6. Dispositif hybride de mesure de hautes températures selon la revendication 5, pour lequel l'écran thermique (406) est fabriqué dans un métal ou dans un matériau céramique.

7. Dispositif hybride de mesure de hautes températures selon l'une des revendications 1 à 6, pour lequel le matériau à haute résistance thermique est du platine.

8. Procédé pour la fabrication d'un dispositif hybride de mesure de hautes températures comportant les étapes suivantes :
a) mise à disposition d'une sonde de hautes températures (100) comprenant un film de mesure de hautes températures (106), une première connexion dans un matériau à haute résistance thermique (108) et une deuxième connexion (112) dans un matériau à haute résistance thermique, qui sont reliées au film de mesure de hautes températures (106) ;
b) positionnement de la sonde de hautes températures (100) dans un évidement d'un seul tenant (232) d'un premier substrat céramique (230), disposé à proximité d'une première extrémité (234) du premier substrat céramique (230) ;
c) Fusion du premier substrat céramique (230) avec un deuxième substrat céramique (200) de manière à ce qu'une piste conductive (206) disposée sur le deuxième substrat céramique est reliée, au niveau d'une première extrémité (264) dudit substrat, à la première connexion (108) de la sonde de hautes températures (100) et où la piste conductive (206) s'étend jusqu'à une deuxième extrémité du deuxième substrat céramique (200) ;
d) fusion du premier substrat céramique (230) avec un troisième substrat céramique (260) de manière à ce qu'une piste conductive (266) disposée sur le troisième substrat céramique (260) soit reliée, au niveau d'une première extrémité (264) dudit substrat, à la deuxième connexion (112) de la sonde de hautes températures (100) et où la piste conductive (266) s'étend jusqu'à une deuxième extrémité du troisième substrat céramique (260) et
e) application d'une première surface de connexion (214) sur le deuxième substrat céramique oblong (200) et d'une deuxième surface de connexion (302) sur le troisième substrat céramique oblong (260), destiné au raccordement de conducteurs électriques (402, 404), au moyen d'un matériau non résistant aux hautes températures, pour le prélèvement d'un signal généré par la sonde de hautes températures (100).

9. Procédé selon la revendication 8 avec l'étape suivante :
établissement du contact de la première et de la deuxième piste conductive (206, 266), avec respectivement une première et une deuxième surface de connexion (214, 302), disposées respectivement à proximité de la deuxième extrémité (204, 268) des deuxième et troisième substrats céramiques (200, 260).

10. Procédé selon la revendication 8 ou 9 avec l'étape suivante :
aménagement sur le boîtier, dans une position située entre la première et la seconde extrémité du boîtier, d'une paroi de séparation thermique résultant de la fusion des premier, deuxième et troisième substrats céramiques.
